# EUROPÄISCHE PATENTSCHRIFT

(11) **EP 3 630 666 B1**
(45) Veröffentlichungstag und Bekanntmachung des Hinweises auf die Patenterteilung: **05.05.2021**
(21) Anmeldenummer: 18729104.2
(22) Anmeldetag: 04.06.2018
(51) Int. Cl.: B66C 7/02, B65G 49/00, B66C 1/02, B66F 7/06, B66C 11/06, B25J 15/06, B65G 47/90, B65G 47/91, B25J 9/02, B25J 15/02, B25J 19/00

(54) **HANDHABUNGSVORRICHTUNG MIT HUBSCHERENGLIDERN**
HANDLING DEVICE HAVING SCISSOR-LIFT MEMBERS
DISPOSITIF DE MANUTENTION COMPRENANT DES SEGMENTS DE CISEAU ÉLÉVATEUR

(30) Priorität: 02.06.2017 DE 102017112240
(43) Veröffentlichungstag der Anmeldung: 08.04.2020
(73) Patentinhaber: Dücker Group GmbH, 40764 Langenfeld (DE)
(72) Erfinder: STEHR, Roland, 40764 Langenfeld (DE)
(74) Vertreter: Greif, Thomas
(86) Internationale Anmeldenummer: PCT/EP2018/064625
(87) Internationale Veröffentlichungsnummer: WO 2018/220229

(56) Entgegenhaltungen:
- WO-A1-2009/094995
- FR-A1- 2 627 761
- US-A1- 2005 079 041

## Beschreibung

Die Erfindung betrifft eine Handhabungsvorrichtung, aufweisend einen relativ zu einem trägerbewegbaren Antriebswagen, wobei an dem Antriebswagen mit ihrem einen Ende eine Hubschere angeordnet ist, wobei weiterhin an dem anderen Ende der Hubschere ein Greifwerkzeug angeordnet ist.

Es sind als Handhabungsvorrichtungen Palettenroboter bekannt, die zum Versetzen von Gegenständen eingesetzt werden. Gegenstände sind beispielsweise flächige Gebilde wie Pappen, Holzbretter und dergleichen. Es können aber mit einem solchen Palettenroboter auch andere Gegenstände wie zum Beispiel Europaletten, Kisten und dergleichen versetzt werden.

Zum Versetzen weist der Palettenroboter ein Greifwerkzeug auf, wobei das Greifwerkzeug Höhen verfahrbar an einem Träger ebenfalls verfahrbar angeordnet ist. Es ist bekannt, zum Verfahren des Greifwerkzeuges zum Beispiel an einer Decke einer Maschinenhalle oder auch auf einer Aufständerung einen T-förmigen Träger anzuordnen, an dem wiederum eine Laufkatze angeordnet ist. Hierfür sind offene Ausgestaltungen bekannt, so dass diese bekannten Laufkatzen sehr schnell verschmutzen, nur gerade Verfahrwege zulassen und aufwendig sowie voluminös hinsichtlich ihrer Konstruktion sind Die FR 2 627 761 A1 offenbart eine Handhabungsvorrichtung gemäß dem Oberbegriff des unabhängigen Anspruchs 1.

Der Erfindung liegt die Aufgabe zugrunde, eine bekannte Handhabungsvorrichtung hinsichtlich ihres Betriebes zu verbessern.

Diese Aufgabe ist durch die Merkmale des Patentanspruches 1 gelöst.

Nach der Erfindung ist eine Handhabungsvorrichtung vorgesehen, aufweisend einen relativ zu einem Träger bewegbaren Antriebswagen, wobei an dem Antriebswagen mit ihrem ersten Ende eine mehrere Hubscherenglieder aufweisende Hubschere angeordnet ist, wobei an dem zweiten Ende der Hubschere eine mittels der Hubschere relativ zu dem Antriebswagen verfahrbare Trägerplatte angeordnet ist, wobei an der Trägerplatte ein Greifwerkzeug angeordnet ist, und wobei die Hubscherenglieder durchgehend hohl ausgebildet und dichtend miteinander verbunden sind, um mittels eines gasförmigen Mediums das Greifwerkzeug zu betätigen.

Mittels des Trägers wird die Handhabungsvorrichtung an ihrem bestimmungsgemäßen Ort angeordnet, wobei der Träger zum Beispiel an der Decke einer Fabrikhalle mit geeigneten Mitteln befestigt wird. Alternativ dazu ist es denkbar, den Träger vorzugsweise mit seinen beiden Enden auf dem Boden einer Fabrikhalle aufzuständern. Mit dem Antriebswagen kann eine vertikale hin- und her-Bewegung erfolgen, wobei eine horizontale Auf- und Abbewegung mittels einer an sich bekannten Hubschere erfolgt. Das Handling von Gegenständen erfolgt mittels des Greifwerkzeuges, welches dazu ausgebildet und geeignet ist, Gegenstände, die sich in einer ersten Position befinden, aufzunehmen, vertikal und/oder horizontal zu bewegen und in einer von der ersten Position abweichenden weiteren Position abzulegen.

Zur Betätigung des Greifwerkzeuges ist es erfindungsgemäß vorgesehen, dass die Hubscherenglieder der Hubschere durchgehend hohl ausgebildet und dichtet miteinander verbunden sind, um mittels eines gasförmigen Mediums das Greifwerkzeug zu betätigen. Das Greifwerkzeug beziehungsweise seine Greifelemente werden nicht mehr durch elektrische Antriebe betätigt, sondern es wird eine Vorrichtung zur Erzeugung des gasförmigen Mediums bereitgestellt, wobei das bereitgestellte gasförmige Medium über die hohlen Hubscherenglieder von dem Antriebswagen, in dem sich die Erzeugungsvorrichtung befindet, bis hin zum dem Greifwerkzeug beziehungsweise zu dessen entsprechenden Greifelementen übertragen wird. Damit entfallen in vorteilhafter Weise zusätzliche Übertragungsmittel, wie zum Beispiel Druckluftschläuche. Die Hubschere erfüllt somit zwei Funktionen, nämlich zum einen die eigentliche Auf- und Abbewegung der zu handelnden Gegenstände und die Übertragung des gasförmigen Mediums, mit dem die Greifelemente des Greifwerkzeuges betätigt werden. Hierbei versteht es sich von selbst, dass zwischen der Vorrichtung zur Erzeugung des gasförmigen Mediums bis hin zu dem Greifwerkzeug beziehungsweise zu den Greifelementen eine dichtende Verbindung realisiert ist, um ein Austreten des Mediums zu verhindern. Insbesondere sind die Befestigungs- und Anlenkpunkte der betroffenen Hubscherenglieder an dem Antriebswagen sowie an dem Greifwerkzeug sowie die Anlenkpunkte der Hubscherenglieder, mit denen sie untereinander verbunden sind, so ausgebildet, dass die Funktion (insbesondere eine Schwenkbewegung in einem vorgebbaren Winkel) und gleichzeitig die dichte Übertragung des Mediums sichergestellt ist. Gleichzeitig bilden die hohlen Hubscherenglieder einen Vorratsspeicher für das gasförmige Medium.

In Weiterbildung der Erfindung ist das gasförmige Medium Druckluft und an dem Antriebswagen ist eine Vorrichtung zur Erzeugung von Druckluft angeordnet. Die Vorrichtung zur Erzeugung von Druckluft wird somit bei der Bewegung des Antriebswagens mit bewegt. Die erzeugte Druckluft wird über die hohlen Hubscherenglieder zu dem Greifwerkzeug übertragen. Gleichzeitig bilden die hohlen Hubscherenglieder einen Vorratsspeicher für die Druckluft. Mittels dieser übertragenen Druckluft kann das Greifwerkzeug selber betätigt werden (zum Beispiel um die Hochachse der Handhabungsvorrichtung gedreht werden) und/oder die Greifelemente des Greifwerkzeuges können zur Aufnahme und Ablage des Gegenstandes bewegt werden. In diesen beiden Fällen kann ein bekannter Antrieb des Greifwerkzeuges und/oder der Greifelemente in Form eines Elektromotors entfallen. Selbstverständlich ist es möglich, dass zum Beispiel das Greifwerkzeug nach wie vor mit einem Elektromotor angetrieben wird, wohingegen die Greifelemente mittels der Druckluft betrieben werden (oder umgekehrt).

In Weiterbildung der Erfindung ist vorgesehen, dass das gasförmige Medium ein Vakuum ist und an dem Antriebswagen eine Vorrichtung zur Erzeugung von einem Vakuum angeordnet ist. Auch in diesem Fall sind die Hubscherenglieder hohl ausgebildet und dienen der Übertragung beziehungsweise Bevorratung des Vakuums. Der Antrieb mittels Vakuum kann, wie auch schon bei der Ausführung mittels Druckluft, elektrische Antriebe für das Greifwerkzeug und/oder die Greifelemente ersetzen.

Unabhängig davon, ob das gasförmige Medium eine Druckluft oder ein Vakuum ist, sind entsprechende Steuerungsmittel (Aktoren wie Ventile oder dergleichen) vorhanden, die von einer entsprechenden Steuervorrichtung angesteuert werden, um insbesondere das Greifwerkzeug und/oder dessen Greifelemente zu betätigen. Die Hubschere selber wird vorzugsweise nicht von einem gasförmigen Medium betätigt, sondern hierzu sind entsprechend elektrisch betriebene Antriebsmittel (wie zum Beispiel ein Elektromotor, der einen Zahnriemen antreibt) vorgesehen. Es kann aber dennoch daran gedacht werden, anstelle eines Elektromotors, der einen Zahnriemen antreibt, einen mit Druckluft betriebenen Antriebsmotor einzusetzen.

In Weiterbildung der Erfindung ist an der Trägerplatte des Greifwerkzeuges zumindest eine mit dem Vakuum betreibbare Ansaugtulpe angeordnet. Mittels solcher bekannten und steuerbaren Ansaugtulpen können vorzugsweise flächige Gegenstände (wie zum Beispiel Stapel aus Papier, Karton oder dergleichen) stückweise angesaugt und gehandelt werden.

In Weiterbildung der Erfindung ist in dem Inneren in einem Teil der Hubscherenglieder der Hubschere zumindest ein elektrisches Kabel verlegt. Die Hubschere besteht in an sich bekannter Weise aus zwei Strängen, wobei sich jeweils ein Strang aus mehreren Hubscherenglieder zusammensetzt, die durchgehend miteinander gelenkig und dichtend verbunden sind. Zur Übertragung zum Beispiel von Energie von dem Antriebswagen zu einem Antriebsmotor des Greifwerkzeuges oder zur Übertragung von Signalen zum Beispiel von dem Antriebswagen zu Aktoren und/oder Sensoren des Greifwerkzeuges wird ein elektrisches Kabel ausgehend von dem Antriebswagen durch die hohlen Hubscherenglieder verlegt. Damit ist das elektrische Kabel vor äußeren Einflüssen, insbesondere vor mechanischen Beschädigungen, geschützt und das Gesamterscheinungsbild der Handhabungsvorrichtung wird verbessert. Die Übertragung beziehungsweise Bevorratung des gasförmigen Mediums im Inneren der Hubscherenglieder wird dadurch nicht beeinträchtigt.

In Weiterbildung der Erfindung ist die Verbindung der Hubscherenglieder, mit denen die Hubschere mit der Trägerplatte des Greifwerkzeuges verbunden ist, als wechselbarer Befestigungspunkt ausgebildet. Der wechselbare Befestigungspunkt bildet somit eine Schnittstelle, über die die zugehörigen Enden der Hubscherenglieder mit der Trägerplatte des Greifwerkzeuges verbunden werden. Durch eine solche Schnittstelle kann ein schneller Wechsel des Greifwerkzeuges erfolgen, wenn dieses beispielsweise wegen eines Defektes oder Änderung seiner Dimension ausgewechselt werden soll. Außerdem lässt sich eine solche Schnittstelle hinsichtlich der elektrischen und/oder pneumatischen Verbindung zwischen der Hubschere und dem Greifwerkzeug standardisieren.

Eine Handhabungsvorrichtung (auch Palettenroboter genannt) nach der Erfindung ist im Folgenden anhand eines Ausführungsbeispieles beschrieben. Die gezeigte Handhabungsvorrichtung zeigt nicht nur die erfindungsgemäße Ausgestaltung, sondern auch weitere wesentliche Merkmale der Handhabungsvorrichtung, die alleine oder in Kombination miteinander zu einem effektiven Betrieb dieser Vorrichtung beitragen.

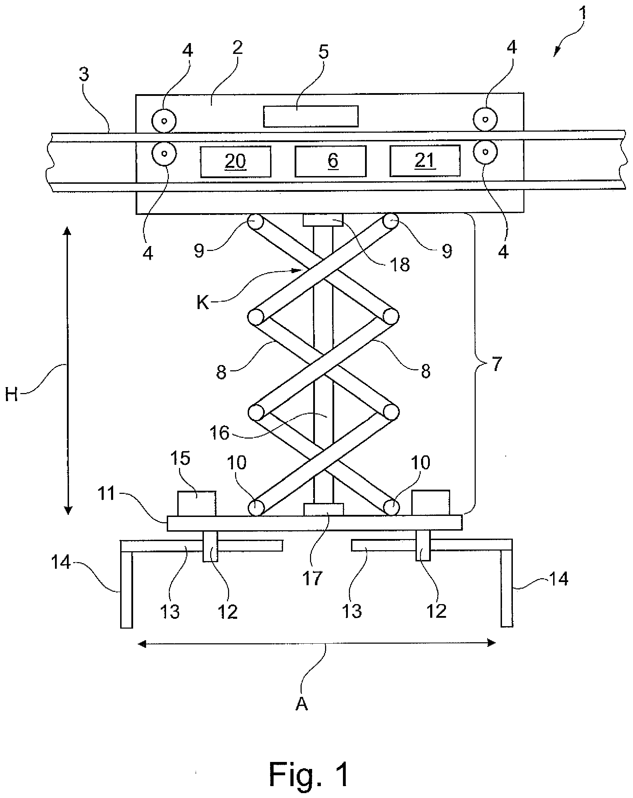

In der Figur 1 ist, soweit im Einzelnen dargestellt, eine Handhabungsvorrichtung 1 im Überblick dargestellt.

Diese Handhabungsvorrichtung 1 umfasst mehrere Komponenten mit ihren Einzelelementen, die im Folgenden im Detail beschrieben werden.

Bei einer Komponente handelt es sich um einen Träger mit einem Antriebswagen, der in dem oberen Teil der Handhabungsvorrichtung 1 vorhanden ist.

Bei einer weiteren Komponente handelt es sich um ein Greifwerkzeug zur Handhabung von Gegenständen wie beispielsweise flächigen Gebilden wie Pappen, Holzbretter, Europaletten und dergleichen. Dieses Greifwerkzeug ist im unteren Teil der Figur 1 erkennbar.

Eine weitere Komponente ist eine Hubschere, die den oberen Teil der Handhabungsvorrichtung 1 mit dem Greifwerkzeug verbindet.

Diese einzelnen Komponenten der Handhabungsvorrichtung 1 werden im Folgenden im Detail beschrieben.

Wie in Figur 1 erkennbar ist, weist die Handhabungsvorrichtung 1 einen Antriebswagen 2 auf, der relativ zu einem ortsfest montierten Längsträger 3 bewegbar ist. Zumindest ein Antriebsrad 4 des Antriebswagens 2 wird von einem Antriebsmotor 5 angetrieben, wobei das zumindest eine Antriebsrad 4 sowie der Antriebsmotor 5 in dem Antriebswagen 2 angeordnet sind. Schematisch dargestellt ist eine Steuervorrichtung 6, mit der Steuerungssignale empfangen werden können, um die einzelnen Komponenten der Handhabungsvorrichtung 1 zu betreiben. Die Steuerungssignale werden drahtgebunden und/oder drahtlos an die Steuervorrichtung 6 gesendet. Ebenso ist es denkbar, dass Signale von der Steuervorrichtung 6 an eine von der Handhabungsvorrichtung 1 unabhängige externe Steuer- und/oder Überwachungsvorrichtung, die auch die Steuersignale an die Steuervorrichtung 6 senden kann, gesendet (oder auch empfangen) werden.

Der Längsträger 3 ist ortsfest montiert. Die Montage erfolgt beispielsweise unter der Decke eines Gebäudes, insbesondere einer Fabrikhalle. Alternativ dazu ist es denkbar, dass er an zumindest zwei Punkten, insbesondere genau zwei Punkten, aufgeständert wird. Von besonderem Vorteil ist die Anordnung von genau zwei Ständern an den beiden Enden des Längsträger 3, da somit der gesamte Zwischenbereich zwischen diesen beiden Punkten von dem Antriebswagen 2 abgefahren werden kann. Mit dem Antriebswagen 2 ist somit eine horizontale Bewegung realisiert.

Unterhalb des Antriebswagens 2 ist für eine Auf- und Abbewegung (vertikale Bewegung) der unterhalb von ihm angeordneten Greifwerkzeuge eine Hubschere 7 angeordnet. Mittels dieser antreibbaren Hubschere 7 kann das Greifwerkzeug in seiner Höhe verändert werden. Durch die vertikale Bewegung des Greifwerkzeuges und die horizontale Bewegung des Antriebswagens 2 können mittels des Greifwerkzeuges Gegenstände aufgenommen, in ihrer Position verändert und wieder abgelegt werden. Die Schere 7 besteht in an sich bekannter Weise aus mehreren Hubscherenglieder 8. Das Ende zweier Hubscherenglieder 8 ist über einen Befestigungspunkt 9 an der Unterseite des Antriebswagens 2 angeordnet. Über jeweils einen Befestigungspunkt 10 sind die Enden zweier weiterer Hubscherenglieder 9 an einer Trägerplatte 11 des Greifwerkzeuges angeordnet. Die Befestigungspunkte 9, 10 lassen es zu, dass der Winkel, mit dem die jeweiligen Hubscherenglieder 8 in Bezug auf die Unterseite des Antriebswagens 2 beziehungsweise der Oberseite der Trägerplatte 11 anliegen, verändert werden kann, um somit die Höhe H zwischen dem Greifwerkzeug und dem Antriebswagen 2 gezielt verändern zu können.

Unterhalb der Trägerplatte 11 des Greifwerkzeuges ist zumindest ein Lagerpunkt 12 angeordnet, wobei dieser Lagerpunkt 12 zumindest eine Führungsstange 13 aufnimmt. Am Ende der Führungsstange 13 ist ein Greifelement 14 angeordnet. Bei einer konkreten Ausführungsform sind insgesamt vier Lagerpunkte 12 vorhanden, wobei jeweils zwei Lagerpunkte 12 einer Führungsstange 13 zugeordnet sind. Das bedeutet, dass zwei Führungsstangen 13 vorhanden sind, wobei jede der beiden Führungsstangen 13 in zwei Lagerpunkten 12 bewegbar und geführt angeordnet sind. An jeweils einem Ende der Führungsstangen 13 ist somit ein Greifelement 14 geschlossen werden, angeordnet. Die beiden gegenüberliegenden Greifelemente 14 können mittels eines steuerbaren Antriebsmotor 15, der auf die Führungsstangen 13 wirkt, in ihrem Abstand A zueinander verändert werden, um einen Gegenstand zu ergreifen (indem der Abstand A verkleinert wird) beziehungsweise diesen wieder nach dem Absetzen freizugeben (indem der Abstand A zumindest geringfügig wieder vergrößert wird).

Die Höhe H der Hubschere 7 wird mittels eines Verstellelementes 16 verändert. Dem Verstellelement 16 ist ein Anschlag. 17 zugeordnet, mit dem es an dem Greifelement befestigt ist. Auf der dem Anschlag. 17 abgewandten Ende ist das Verstellelement 16 mit einem Antrieb 18 verbunden. Bei dem Verstellelement 16 handelt es sich beispielsweise um einen Zahnriemen, der zwischen dem Antrieb 18 und dem Anschlag. 17 angeordnet ist. Durch Betätigung des Verstellelementes 16 mittels des Antriebes 18 wird die Höhe H der Hubschere 7 verändert, wodurch sich der Anstellwinkel der einzelnen Hubscherenglieder 8 zueinander in an sich bekannter Weise ändert.

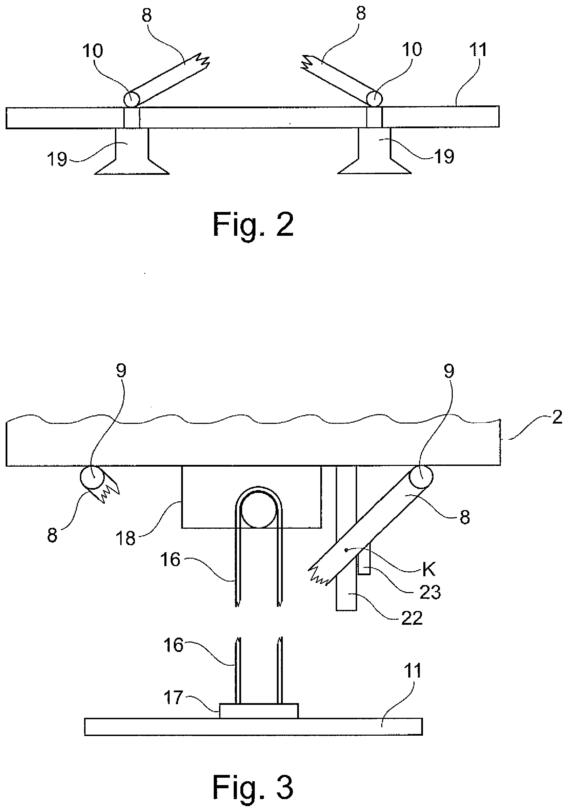

Ein alternatives Ausführungsbeispiel bezüglich des Greifwerkzeuges ist in Figur 2 gezeigt. In Figur 1 war dargestellt, dass das Greifwerkzeug Greifelemente 14 aufweist, die von dem Antriebsmotor 15 in ihrem Abstand A bewegt werden können, um durch Änderung des Abstandes A Gegenstände greifen beziehungsweise wieder ablegen zu können, nachdem sie in ihrer Position durch Bewegung der Hubschere 7 und/oder Verfahren des Antriebswagens 2 verändert worden sind. Alternativ oder ergänzend zu diesen Greifelementen 14 kann das Greifwerkzeug insbesondere an der Trägerplatte 11 angeordnete Ansaugtulpen 19 umfassen. Diese Ansaugtulpen 19 werden zusammen mit einer Vorrichtung 20 zur Erzeugung von einem Vakuum betrieben. Mittels der Vorrichtung 20 wird ein Vakuum erzeugt, dass auf geeignete Weise (zum Beispiel durch Schläuche und/oder durch das Innere der Hubscherenglieder 8) zu den Ansaugtulpen 19 übertragen wird. Beispielsweise mittels der Steuervorrichtung 6 werden diese Ansaugtulpen 19 gesteuert betrieben, um mittels des Vakuums einen Gegenstand durch Ansaugen aufzunehmen. Danach kann der Gegenstand mittels der Hubschere 7 und/oder dem Verfahren des Antriebswagens 2 in eine andere Position gebracht und durch Wegnahme des Vakuums an den Ansaugtulpen 19 wieder freigegeben und damit abgelegt werden. Wird das Vakuum durch das Innere der Hubscherenglieder 8 übertragen, sind diese dichtend miteinander verbunden. Das bedeutet, dass nicht nur die Verbindungspunkte der Hubscherenglieder 8 untereinander, sondern auch die Befestigungspunkte 9, 10 entsprechend dicht ausgebildet sind, um die Übertragung des Vakuums zu ermöglichen. Gleiches gilt auch für die Verbindung von den oberen Enden der Hubscherenglieder 8, die an dem Antriebswagen 2 angeordnet sind, bis hin zu der Vorrichtung 20 zur Erzeugung von einem Vakuum.

Anstelle der Bewegung der Greifelemente 14 des Greifwerkzeuges mittels eines elektrisch betriebenen Antriebsmotor 15 ist es denkbar, dass der Antrieb beziehungsweise die Bewegung der Greifelemente 14 über Druckluft erfolgt. Hierzu ist in dem Antriebswagen 2 eine Vorrichtung 21 zur Erzeugung von Druckluft vorgesehen. Auch hier kann die von der Vorrichtung 21 erzeugte Druckluft über Druckluftschläuche zu den Greifelemente 14 übertragen werden. Ebenso ist es denkbar, dass die Druckluft über das innere der Hubscherenglieder 8 von der Vorrichtung 21 zu den Greifelemente 14 übertragen wird. Auch in diesem Fall sind die Verbindungspunkte der Hubscherenglieder 8 untereinander sowie die Befestigungspunkte 9, 10 dichtet ausgebildet, um zu vermeiden, dass an diesen Stellen, an denen bewegbare Teile miteinander verbunden sind, Druckluft (beziehungsweise Vakuum) austreten kann. Die beiden Vorrichtungen 20, 21 können jeweils alleine vorhanden sein, so dass das Greifwerkzeug entweder nur mit einem Vakuum oder nur mit Druckluft betrieben wird. Es ist auch denkbar, dass die Greifelemente 14 von dem Antriebsmotor 15 gesteuert betrieben werden und zusätzlich die Ansaugtulpen 19 vorhanden sind, sodass in diesem Fall zusätzlich zu dem Antriebsmotor 15 auch die Vorrichtung 20 zur Erzeugung von einem Vakuum vorhanden ist. In diesem Fall kann die Vorrichtung 21 zur Erzeugung von Druckluft entfallen. Daneben ist es denkbar, dass die Greifelemente 14 mittels Druckluft betrieben werden, sodass in diesem Fall neben den Ansaugtulpen 19 und der Vorrichtung 20 zur Erzeugung von einem Vakuum auch die Vorrichtung 21 zur Erzeugung von Druckluft vorhanden ist. Da die Hubschere 7 zwei Stränge von Hubscherengliedern 8 umfasst, kann daran gedacht werden, einen Strang oder beide Stränge für die Übertragung (und Bevorratung) von Druckluft oder einen Strang oder beide Stränge für die Übertragung (und Bevorratung) von Vakuum oder den einen Strang für die Übertragung (und Bevorratung) von Druckluft und den anderen Strang für die Übertragung (und Bevorratung) von Vakuum auszubilden und einzusetzen.

In Figur 3 ist dargestellt, dass das Verstellelement 16 ein Riemenelement, insbesondere ein Zahnriemen, ist. Dieses Verstellelement 16 ist angeordnet zwischen dem an dem Antriebswagen 2 ortsfest angeordneten Antrieb 18 und dem Anschlag. 17 an der Trägerplatte 11 des Greifwerkzeugs.

Um die Höhe H zwischen der Trägerplatte 11 und dem Antriebswagen 2 gezielt steuern zu können und einen Gegenstand von einer ersten Position aus aufzunehmen, zu bewegen und in einer zweiten gewünschten Position wieder abzusetzen, ist es erforderlich, den Wert der Höhe H, das heißt den Abstand zwischen Antriebswagen 2 und Trägerplatte 11, zu erfassen. Diese Erfassung erfolgt durch eine Führungsstange 22, der ein Sensorelement 23 zugeordnet ist. Das Sensorelement 23 ist mit einem der Hubscherenglieder 8 gekoppelt, sodass bei dem Auf- oder Zusammenfahren der Hubschere 7 sich die Position des Sensorelementes 23 in Bezug auf die Führungsstange 22 ändert und diese Änderung mittels des Sensorelementes 23 erfasst wird und ein Maß für die Höhe H ist. Der Ausgangswert des Sensorelementes 23 wird drahtlos oder drahtgebunden an die Steuervorrichtung 6 (und gegebenenfalls eine weitere Steuerungs- und/0der Überwachungsvorrichtung außerhalb der Handhabungsvorrichtung 1) übertragen. Das Sensorelement 23 ist über geeignete nicht dargestellte Kopplungsmittel in einem Kopplungspunkt K mit dem ihm zugeordneten Hubscherenglied 8 gekoppelt. In diesem Fall dient die Führungsstange 22 lediglich der geführten Bewegung des Sensorelementes 23.

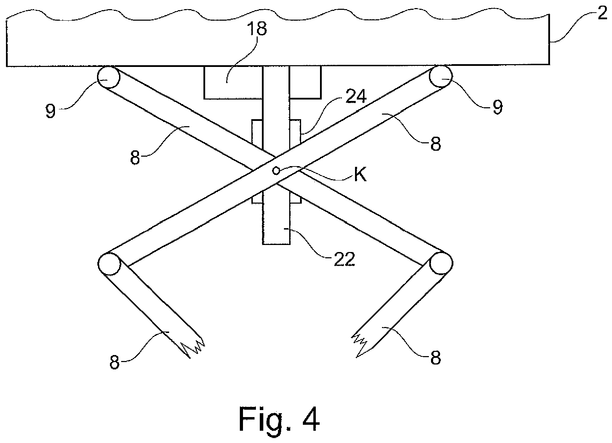

In Figur 4 ist dargestellt, dass die Führungsstange 22 nicht mit einem Sensorelement 23 gekoppelt ist, sondern ein Kopplungselement 24 aufweist. Das Kopplungselement 24 kann relativ linear zu der Führungsstange 22 bewegt werden, wenn mittels des Antriebes 18 die Hubschere 7 auf- beziehungsweise zusammengefahren und damit die Höhe H verändert wird. Damit ist eine Kopplung im Kopplungspunkt K zwischen der Führungsstange 22 und der Hubschere 7 realisiert, wobei die Kopplung eine gezielte Zwangsführung der Hubschere 7 gewährleistet. Es wird somit vermieden, dass die Hubschere 7 während ihres Verfahrens in Schwingung kommen kann. In einem solchen Fall ist kein Sensorelement 23 vorhanden, mit dem die Höhe H erfasst werden könnte. Ist ein solches Sensorelement 23 (wie in Figur 4 dargestellt) nicht vorhanden, kann die Höhe H zum Beispiel durch die Bewegung des Antriebes 18 erfasst werden. Ist der Antrieb 18 ein Elektromotor, kann zum Beispiel aus der Anzahl seiner Umdrehungen auf eine Änderung der Höhe H beziehungsweise die Höhe H (absolut betrachtet) geschlossen werden. Alternativ oder ergänzend dazu ist es denkbar, die Höhe H, das heißt deren Änderung beziehungsweise aktuellen Wert (wie zum Beispiel die Endpunkte oder Punkte dazwischen), durch weitere Erfassungsmittel zu ermitteln (wie beispielsweise eine Laserabstandsmessung zwischen dem Antriebswagen 2 und der Trägerplatte 11). Selbstverständlich ist es auch denkbar, der Anordnung, die in Figur 4 gezeigt ist, ein Sensorelement 23 zuzuordnen. Dieses Sensorelement 23 könnte dann beispielsweise mit dem Kopplungselement 24 verbunden werden, da sich dieses relativ zu der Führungsstange 22 bewegt. Es ist auch denkbar, das Kopplungselement 24 und das Sensorelement 23 in einem einzigen Element zu realisieren.

In Bezug auf die Darstellung in Figur 4 ist noch auszuführen, dass es sich hierbei um eine besonders vorteilhafte Ausgestaltung handelt, bei der genau zwei Führungsstangen 22 vorgesehen sind und der Antrieb 18 für die Hubschere 7 mittig zwischen den beiden neben ihm angeordneten Führungsstangen 22 angeordnet ist. Bei Betrachtung der Figur 4 ist erkennbar, dass sich zwei Hubscherenglieder 8 in dem Kopplungspunkt K kreuzen, wobei dieser Kopplungspunkt K in etwa in der Mitte, vorzugsweise genau in der Mitte, zwischen den beiden dargestellten Hubscherengliedern 8 befindet. Beim Blick auf Figur 4 hinter diesen beiden Hubscherenglieder 8, die einen ersten Strang der Hubschere 7 bilden, befindet sich eine erste Führungsstange 22 (dargestellt), die mit dem Kopplungselement 24 versehen ist, welches relativ zu der Führungsstange 22 bewegbar ist, wenn die Hubschere 7 auf- beziehungsweise zugefahren wird. Hinter dieser dargestellten ersten Führungsstange 22 befindet sich der Antrieb 18 für die Hubschere 7. Wiederum dahinter befindet sich (nicht dargestellt) eine zweite Führungsstange 22, der ebenfalls ein eigenes Kopplungselement 24 zugeordnet ist. Dieses letztgenannte Kopplungselement 24 (in Figur 4 nicht erkennbar) wiederum ist mit ebenfalls nicht dargestellten weiteren Hubscherengliedern 8 in einem weiteren Kopplungspunkt K gekoppelt, wobei diese weiteren Hubscherenglieder 8 den zweiten Strang der Hubschere 7 bilden. Durch die vorstehend beschriebene Anordnung ergibt sich ein symmetrischer Aufbau der Zwangsführung der Hubschere 7, wenn diese aufbeziehungsweise zugefahren wird. Der Antrieb 18 ist beispielsweise ein Elektromotor (nicht dargestellt), der auf einen Zahnriemen wirkt, der sich an dem Greifwerkzeug abstützt und durch Längenänderung die Höhe H beziehungsweise die Position des Greifwerkzeuges in Bezug auf den Antriebswagen 2 und genauso die Position des Greifwerkzeuges in Bezug auf die Arbeitsfläche verändert.

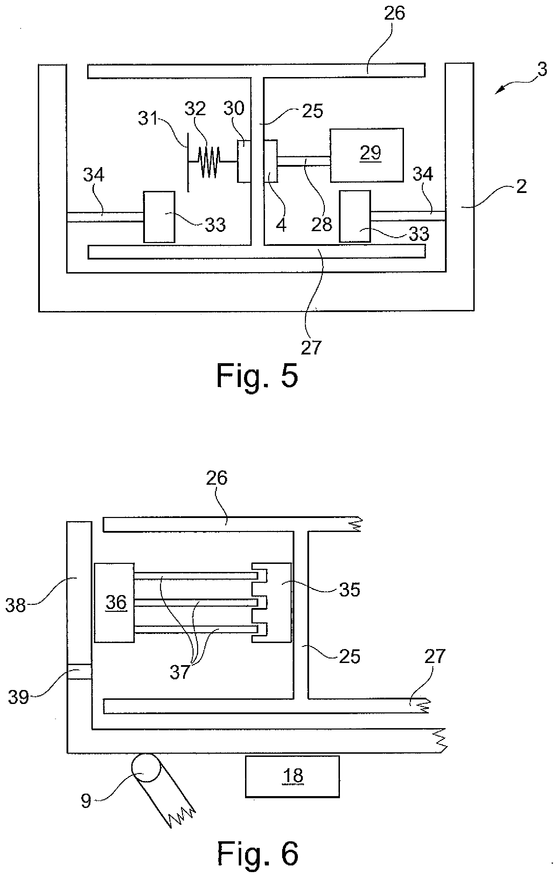

In den Figuren 5 und 6 sind weitere Detailansichten des Längsträgers 3 im Zusammenwirken mit dem Antriebswagen 2 dargestellt.

In Figur 5 ist erkennbar, dass der Längsträger 3 als H-förmiger Träger ausgebildet ist. Dieser Träger weist einen Mittenschenkel 25 und ausgehend von den beiden Enden des Mittenschenkels 25 abstehende obere Schenkel 26 und untere Schenkel 27 auf. Mit den oberen Schenkeln 26 wird der Längsträger 3 über geeignete (nicht dargestellte) Befestigungsmittel zum Beispiel an der Decke einer Fabrikhalle befestigt. Der Zwischenbereich zwischen den Schenkeln 25, 26,27 steht somit zur Verfügung, um insbesondere die Antriebsmittel des Antriebswagens 2, die Steuervorrichtung 6, gegebenenfalls die Vorrichtungen 20, 21 sowie Mittel zur Führung des Antriebswagens 2 in Bezug auf den Längsträger 3 während seiner Bewegung anzuordnen beziehungsweise innerhalb dieses Bereiches zu integrieren. Idealerweise ragt kein einziges Element über die Enden der beiden Schenkel 26, 27 hinaus. Die Integration hat den Vorteil, dass eine kompakte Bauweise des Antriebswagens 2 realisiert ist.

Das zumindest eine in Figur 1 schon schematisch dargestellte Antriebsrad 4 ist über eine Welle 28 mit einem Elektromotor 29 verbunden, der den Antriebswagen 2 längs des Längsträgers 3 bewegt. In dem Ausführungsbeispiel gemäß Figur 5 stützt sich das Antriebsrad 4 an dem Mittenschenkel 25, vorzugsweise genau in der Mitte zwischen den beiden Schenkel 26, 27 ab. Es kann sich auch an einer anderen Stelle an dem Mittenschenkel 25 oder an einem der beiden Schenkel 26, 27 abstützen. Stützt sich das Antriebsrad 4 an der gezeigten Position in Figur 5 ab, ist ebenso vorzugsweise ein Führungsrad 30 in der Mitte des Mittenschenkels 25 (wiederum vorzugsweise genau gegenüberliegend der Position des Antriebsrades 4) angeordnet. Das Führungsrad 30 stützt sich ab an einer Basis 31 des Antriebswagens 2. Diese Abstützung kann entweder starr sein oder, wie in Figur 5 dargestellt ist, über ein Federelement 32 erfolgen. Die Abstützung über ein Federelement 32 hat den Vorteil, dass nicht nur Toleranzen des Längsträgers 3 während des Verfahrens des Antriebswagens 2 ausgeglichen werden können, sondern dass auch dann eine Kurvenfahrt möglich ist, wenn der Längsträger 3 in seiner Längserstreckung eine Bogenform aufweist.

Je nach Ausgestaltung des zumindest einen Antriebsrades 4 (gegebenenfalls unter Zuhilfenahme des zumindest einen Führungsrades 30) ist es ausreichend, dass sich der Antriebswagen 2 auf seinem Verfahrweg an dem Längsträger 3 abstützt. Zur optimalen Führung und auch zur bestmöglichen Aufnahme sowie Bewegung der mittels des Greifwerkzeuges aufgenommenen und zu bewegenden Gegenstände weist der Antriebswagen 2 zumindest ein tragendes Rad 33 auf, welches beispielsweise über eine Welle 34 an einer Basis des Antriebswagens 2 (zum Beispiel seines Seitenteiles) angeordnet ist und sich dort abstützt. Zur Lastaufnahme stützt sich das zumindest eine tragende Rad 33 auf dem unteren Schenkel 27 ab. Von besonderer Bedeutung ist es, dass der Antriebswagen 2 jeweils in etwa in seinem Endbereich jeweils ein tragendes Rad 33, also insgesamt vier tragende Räder 33, aufweist. Zwei von den tragenden Rädern 33 stützen sich somit auf der einen Seite des Mittenschenkels 25 auf dem unteren Schenkel 27 und die beiden weiteren tragenden Räder 33 auf der anderen Seite ab. Alternativ zu den vorstehend beschriebenen vier tragenden Rädern 33 kommen auch drei tragende Räder (Dreibeinprinzip) in Betracht.

In Figur 6 ist dargestellt, wie Stromzufuhrmittel innerhalb des Antriebswagens 2 und in dem Innenbereich des H-förmigen Längsträgers 3 zwischen den Schenkeln 25, 26, 27 integriert sind. Bei den Stromzufuhrmitteln handelt es sich um eine Stromschiene 35, die über den Längsverlauf des Längsträgers 3 an dessen Mittenschenkel 25 angeordnet ist. An dem Antriebswagen 2 ist ein Stromverteiler 36 angeordnet, der über Stromabnehmer 37 mit der Stromschiene 35 verbunden ist. Während in Figur 6 drei Stromabnehmer 37 dargestellt sind, können auch mehr oder weniger als drei Stromabnehmer 37 installiert werden. Außerdem ist es denkbar, die Stromzufuhrmittel nicht nur für die Energiezufuhr zum Beispiel zu den Antrieben 15 oder 18 zu nutzen, sondern auch Steuer- und/oder Sensorsignale darüber zu übertragen.

Alternativ oder ergänzend zu den Stromzufuhrmitteln, die in Figur 6 dargestellt sind, kann der Antriebswagen 2 auch eine Abdeckung 38 umfassen, die zumindest teilweise oder auch vollständig den freien Bereich des Längsträgers 3, gebildet durch die Enden der Schenkel 26, 27, abdeckt. Eine solche Abdeckung 38 hat den Vorteil, dass der Innenbereich des Längsträgers 3 und damit der Innenbereich des Antriebswagens 2 vor Zugriffen während des Betriebes der Handhabungsvorrichtung 1 geschützt ist. Außerdem werden störende Verschmutzungen dieses Innenbereiches durch die geschlossene Abdeckung 38 vermieden. Vorzugsweise ist ein Teil der Abdeckung 38, gegebenenfalls aber auch die gesamte Abdeckung 38, die sich über die Gesamthöhe oder einen kleineren Teil der Gesamthöhe des Antriebswagens 2 und/oder über die gesamte Breite oder einen kleineren Teil der Gesamtbreite des Antriebswagens 2 erstreckt, abklappbar, um an das Innere des Antriebswagens 2 zwecks Montage, Wartung, Reinigung und dergleichen zu gelangen. Zu diesem Zweck ist ein seitlicher Teil des Antriebswagens 2 mit einem Gelenk 39 verbunden. Das bedeutet, dass an dem Antriebswagen 2 über das zumindest eine Gelenk 39 eine Montageklappe (die auch als Wartungsklappe bezeichnet werden könnte, also die Abdeckung 38) bewegbar angeordnet ist.

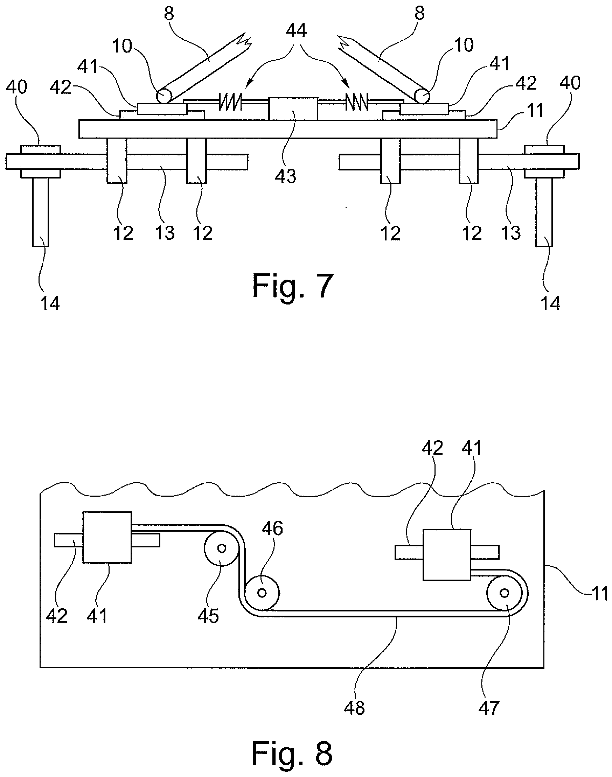

In Figur 7 ist das schon in Figur 1 schematisch dargestellte Greifwerkzeug mit weiteren Details gezeigt. Bei diesem Ausführungsbeispiel bleibt das Grundprinzip erhalten, dass an der Trägerplatte 11 gelagerte Führungsstangen 13 vorhanden sind, an denen Greifelemente, insbesondere plattenförmige Greifelemente, angeordnet sind. Mittels eines Antriebes, insbesondere mittels des Antriebsmotors 15 (elektrisch oder mit Druckluft betrieben oder dergleichen), wird der Abstand A zwischen den Greifelementen 14 gesteuert verändert, um den zu handelnden Gegenstand aufzunehmen, zu bewegen und wieder abzusetzen. Wie in der Figur 7 erkennbar sind die Führungsstangen 13 in Lagerpunkten 12 an der Trägerplatte 11 gelagert und relativ zu dieser bewegbar. Nach der Erfindung sind die Greifelemente 14 nicht fest an den Führungsstangen 13, insbesondere an dessen Enden, angeordnet und befestigt, sondern die Anordnung und Befestigung erfolgt über ein Kopplungselement 40. Das Kopplungselement 40 kann beispielsweise eine Schraub-Klemm-Befestigung des Endes der Führungsstange 13 an dem zugehörigen Teil des Greifelementes 14 sein. Dadurch ist ein einfacher Austausch der beteiligten Elemente gegeben. Unter Beibehaltung der Führungsstangen 13 können somit verschiedene Greifelemente 14 verwendet werden. Bei gleichen oder verschiedenen Greifelementen 14 können auch die Führungsstangen 13 ausgetauscht werden, sodass beispielsweise kurze, mittellange und lange Führungsstangen, die in Abhängigkeit der Dimensionen des zu handelnden Gegenstandes gewählt werden, eingesetzt werden können. Nicht gezeigt, aber vorhanden sind Sensorelemente, die insbesondere an der Trägerplatte 11 angeordnet werden. Mit diesen Sensorelementen kann die Position von zumindest einer Führungsstange 13, vorzugsweise allen Führungsstangen 13, in Bezug auf die Trägerplatte 11 ermittelt und an die Steuervorrichtung 6 übermittelt werden.

Außerdem ist in der Figur 7 dargestellt, wie die Hubschere 7 an dem Greifwerkzeug zwecks Zentrierung des Greifwerkzeuges in Bezug auf die Hubschere 7 angeordnet werden kann. Hierzu sind die jeweiligen Enden der Hubscherenglieder 8 mit ihren Befestigungspunkten 10 (Gelenkpunkte) an einem Führungsschlitten 41 angeordnet. Über die Befestigungspunkte 10 kann der Winkel der dort angeordneten Hubscherenglieder 8 in Bezug auf die Oberfläche der Trägerplatte 11 verändert werden. Dies erfolgt, wenn die Hubschere 7 auf- beziehungsweise zugefahren wird. Der jeweilige Führungsschlitten 41 ist gleitend bewegbar an einer Führungsschiene 42 angeordnet und steht somit positionsveränderbar mit dem Führungsschlitten 41 in Wirkverbindung. Durch diese Verbindung der Hubschere 7 mit der Trägerplatte 11 kann die Relativposition zwischen diesen beiden Elementen verändert werden. Wichtig im Betrieb der Handhabungsvorrichtung 1 ist es, dass die Trägerplatte 11 und damit das gesamte Greifwerkzeug immer zentriert (im Sinne einer definierten Position) in Bezug auf den Antriebswagen 2 beziehungsweise in Bezug auf die Hubschere 7 ausgerichtet ist. Diese Zentrierung ist zum Beispiel durch Stöße bei der Aufnahme des Gegenstandes nicht immer gegeben. Um eine Zentrierung, insbesondere eine Selbstzentrierung zu realisieren, kann die Hubschere 7 über die Wirkverbindung des Führungsschlittens 41 mit der Führungsschiene 42 in Bezug auf das Greifwerkzeug ausgerichtet werden. Um eine Selbstzentrierung zu realisieren sind an einer Basis 43 der Trägerplatte 11 Ausgleichsmittel 44 angeordnet, wobei mit den Ausgleichsmitteln 44 bewirkt wird, dass dann, falls die Hubschere 7 nicht mehr zentral zu dem Greifwerkzeug ausgerichtet ist, eine Rückführung in die zentral ausgerichtete Position gewährleistet ist. Diese Ausgleichsmittel 44 können beispielsweise Federelemente sein. Es ist auch denkbar, die Ausgleichsmittel 44 nicht an der Basis 43 der Trägerplatte 11 anzuordnen, sondern die Ausgleichsmittel 44 (zum Beispiel in Form eines Seilzuges) an den beiden gegenüberliegenden Führungsschlitten 41 anzuordnen und zu befestigen und über zumindest zwei, vorzugsweise drei Umlenkrollen, die an der Trägerplatte 11 angeordnet und befestigt sind, umzulenken. Diese Anordnung und Befestigung sowie die Umlenkung der Ausgleichsmittel 44 insbesondere in Form eines Seilzuges bewirkt, dass zum Beispiel infolge von Stößen das Greifwerkzeug aus der zentralen Ausrichtung in Bezug auf die Hubschere 7 heraus bewegt werden kann, wobei aufgrund der Umlenkung der Ausgleichsmittel 44 anschließend nach Wegfall der äußeren Einwirkung wieder eine Selbstzentrierung erfolgt.

In den Figuren 1 und 7 ist dargestellt, dass die Trägerplatte 11 als einstückiges flächiges Gebilde ausgestaltet ist. Alternativ dazu ist es denkbar, die Trägerplatte 11 in Sandwichbauweise zu gestalten. Das bedeutet, dass zwei flächige Gebilde (gleichartiger Gestaltung und/oder Dimension oder voneinander unterschiedlicher Gestaltung und/oder Dimension) vorhanden sind, die um einen mittigen Drehpunkt relativ zueinander verdrehbar sind. Damit ist es möglich, die in Richtung der Hubschere 7 weisende erste Trägerplatte an der Hubschere 7 anzuordnen und zu befestigen, wohingegen an der zweiten Trägerplatte, die flächig parallel dazu ausgerichtet ist, sich die Führungsstangen mit den Greifelementen und deren zugehöriger Lagerung befinden. Dadurch können die Greifelemente um die Hochachse der Handhabungsvorrichtung 1 verdreht werden. Diese Verdrehung kann gestuft (zum Beispiel um 90°) oder stufenlos gesteuert erfolgen. Dadurch ist eine Anpassung der Lage der Greifelemente 14 in Bezug auf den aufzunehmenden Gegenstand möglich. Die Erfassung der Lage des aufzunehmenden Gegenstandes kann beispielsweise durch geeignete Bilderfassungsmittel erfolgen.

In Figur 8 ist eine besonders bevorzugte Ausführung der Zentrierung des Greifwerkzeuges in Bezug auf die Mitten-Hochachse der Hubschere 7 beziehungsweise des Antriebswagens 2 gezeigt. Die jeweiligen Hubscherenglieder 8 sind wiederum an jeweils einem Führungsschlitten 41 angeordnet. Jeweils einem Führungsschlitten 41 ist eine an der Trägerplatte 11 befestigte Führungsschiene 42 zugeordnet und steht mit dieser in Wirkverbindung. Dadurch ist, wie auch schon in Bezug auf Figur 7 beschrieben, eine lineare geführte Hin- und Herbewegung des Greifwerkzeuges in Bezug auf die Hubschere 7 möglich. Um diese Bewegung zuzulassen und gleichzeitig das Greifwerkzeug zu zentrieren, sind Umlenkungsrollen 45, 46 und 47 in der gezeigten Anordnung auf der Trägerplatte 11 montiert. Ein Ende eines Seilzuges 48 ist an dem einen Ende des Führungsschlitten 41 des einen Stranges der Hubschere 7 und das andere Ende an dem gegenüberliegenden Führungsschlitten 41 des gleichen Stranges der Hubschere 7 befestigt. Aufgrund dieser zueinander versetzten Anordnung der Umlenkungsrollen 45,46 und 47 und dem entsprechenden Versatz und der daraus resultierenden Führung des Seilzuges 48 wird einerseits eine geführte lineare Hin- und Herbewegung des Greifwerkzeuges zugelassen, andererseits aber auch bewirkt, dass dann, wenn eine Auslenkung aus der zentrierten Mittellage erfolgte (zum Beispiel aufgrund einer äußeren Stoßeinwirkung), das Greifwerkzeug wieder in seine Mittellage in Bezug auf die Hochachse der Handhabungsvorrichtung 1 zurückkehrt. Alternativ oder ergänzend dazu kann die in Figur 8 gezeigte Anordnung der Umlenkungsrollen 45, 46 und 47 und des Seilzuges 48 auch auf der anderen Seite der Hubschere 7, das heißt an dem gegenüberliegenden Strang der Hubschere 7, angeordnet werden. Anstelle dieser in Figur 8 gezeigten Anordnung kann auch eine Anordnung aus nur zwei Umlenkungsrollen in Betracht kommen, wobei die eine Umlenkungsrolle auf der Trägerplatte 11 in etwa im Bereich zwischen zwei Führungsschlitten eines Stranges der Hubschere 11 angeordnet ist und einen Versatz des Seilzuges bewirkt. Im Endbereich eines Führungsschlittens ist auf der Trägerplatte 11 eine weitere Umlenkungsrolle vorhanden, die eine Umlenkung des Seilzuges um etwa oder genau 180° realisiert. Die letztgenannte Anordnung wird vorzugsweise bei dem einen Strang der Hubschere 7 realisiert, wobei dann bei dem anderen Strang der Hubschere 7 die in Figur 8 gezeigte Anordnung vorhanden ist.

Im Folgenden wird die Erfindung noch einmal kurz mit anderen Worten beschrieben:
Zur Betätigung des Greifwerkzeuges für das Handling von Gegenständen ist dieses an einer Hubschere an einem Schlitten (Laufkatze) an einem Träger angeordnet. Über die Hubscheren ist eine Höhenverfahrbarkeit des Greifwerkzeuges möglich.

Für die Höhenverfahrbarkeit beziehungsweise die Betätigung der Greifelemente des Greifwerkzeuges hat sich der Einsatz von Druckluft bewährt. Hierzu ist es erforderlich, von einer Druckluftquelle die Druckluft über Druckluftleitungen zu den Antriebselementen zu übertragen. Allerdings ist eine Steuerung der Druckluft äußerst schwierig und der entsprechende Aufbau des Druckluftsystemes sehr komplex, wenn die Betätigung der Aktoren mittels Druckluft feinfühlig erfolgen soll. Dies ist oftmals jedoch erforderlich, wenn empfindliche Gegenstände wie zum Beispiel Pappe, Holzplatten oder dergleichen gehandhabt werden sollen.

Nach der Erfindung ist vorgesehen, dass die jeweiligen Glieder der Hubschere mechanisch und konstruktiv in bekannter Weise über Drehpunkte miteinander verbunden sind, um die bekannte und erforderliche Funktion der Hubschere zu gewährleisten. Gleichzeitig ist jedoch der Innenbereich der einzelnen Elemente der Hubscherenglieder zur Übertragung von Druckluft ausgebildet. Vor allen Dingen sind die einzelnen Hubscherenglieder auch in den Punkten, in denen sie relativ bewegbar miteinander verbunden sind, zur Übertragung von Druckluft ausgebildet. Dadurch entsteht ein sehr einfaches Gebilde, da die einzelnen Hubscherenglieder zur Übertragung von Druckluft eingesetzt werden können und der Einsatz von zusätzlichen Druckluftschläuchen entfällt. Gegebenenfalls können auch elektrische Leitungen in dem Innenbereich der Hubscherenglieder verlegt werden.

### Bezugszeichenliste

- 1.: Handhabungsvorrichtung
- 2.: Antriebswagen
- 3.: Längsträger
- 4.: Antriebsrad
- 5.: Antriebsmotor
- 6.: Steuervorrichtung
- 7.: Hubschere
- 8.: Hubscherenglied
- 9.: Befestigungspunkt
- 10.: Befestigungspunkt
- 11.: Trägerplatte
- 12.: Lagerpunkt
- 13.: Führungsstange
- 14.: Greifelement
- 15.: Antriebsmotor
- 16.: Verstellelement
- 17.: Anschlagpunkt
- 18.: Antrieb
- 19.: Ansaugtulpe
- 20.: Vorrichtung zur Erzeugung von einem Vakuum
- 21.: Vorrichtung zur Erzeugung von Druckluft
- 22.: Führungsstange
- 23.: Sensorelement
- 24.: Kopplungselement
- 25.: Mittenschenkel
- 26.: Oberer Schenkel
- 27.: Unterer Schenkel
- 28.: Welle
- 29.: Elektromotor
- 30.: Führungsrad
- 31.: Basis
- 32.: Federelement
- 33.: Tragendes Rad
- 34.: Welle
- 35.: Stromschiene
- 36.: Stromverteiler
- 37.: Stromabnehmer
- 38.: Abdeckung
- 39.: Gelenk
- 40.: Kopplungselement
- 41.: Führungsschlitten
- 42.: Führungsschiene
- 43.: Basis
- 44.: Ausgleichsmittel
- 45.: Umlenkrolle
- 46.: Umlenkrolle
- 47.: Umlenkrolle
- 48.: Seilzug

## Patentansprüche

1. Handhabungsvorrichtung (1), aufweisend einen relativ zu einem Träger (3) bewegbaren Antriebswagen (2), wobei an dem Antriebswagen (2) mit ihrem ersten Ende eine mehrere Hubscherenglieder (8) aufweisende Hubschere (7) angeordnet ist, wobei an dem zweiten Ende der Hubschere (7) eine mittels der Hubschere (7) relativ zu dem Antriebswagen (2) verfahrbare Trägerplatte (11) angeordnet ist, wobei an der Trägerplatte (11) ein Greifwerkzeug angeordnet ist, **dadurch gekennzeichnet, dass** die Hubscherenglieder (8) durchgehend hohl ausgebildet und dichtend miteinander verbunden sind, um mittels eines gasförmigen Mediums das Greifwerkzeug zu betätigen.

2. Handhabungsvorrichtung (1) nach Anspruch 1, **dadurch gekennzeichnet, dass** das gasförmige Medium Druckluft ist und an dem Antriebswagen eine Vorrichtung (20) zur Erzeugung von Druckluft angeordnet ist.

3. Handhabungsvorrichtung (1) nach Anspruch 1, **dadurch gekennzeichnet, dass** das gasförmige Medium ein Vakuum ist und an dem Antriebswagen eine Vorrichtung (20) zur Erzeugung von einem Vakuum angeordnet ist.

4. Handhabungsvorrichtung (1) nach Anspruch 3, **dadurch gekennzeichnet, dass** an der Trägerplatte (11) zumindest eine mit dem Vakuum betreibbare Ansaugtulpe (19) angeordnet ist.

5. Handhabungsvorrichtung (1) nach einem der vorhergehenden Ansprüche, **dadurch gekennzeichnet, dass** in dem Inneren in einem Teil der Hubscherenglieder (8) der Hubschere (7) zumindest ein elektrisches Kabel verlegt ist.

6. Handhabungsvorrichtung (1) nach einem der vorhergehenden Ansprüche, **dadurch gekennzeichnet, dass** die Verbindung des Hubscherengliedes (8), mit dem die Hubschere (7) mit der Trägerplatte (11) verbunden ist, als wechselbarer Befestigungspunkt (10) ausgebildet ist.

## Claims

1. Handling device (1), having a drive vehicle (2) which is movable relative to a beam (3), wherein a lifting scissor mechanism (7) which has multiple lifting scissor mechanism members (8) is arranged with its first end on the drive vehicle (2), wherein, on the second end of the lifting scissor mechanism (7), there is arranged a carrier plate (11) which is movable relative to the drive vehicle (2) by means of the lifting scissor mechanism (7), wherein a gripping tool is arranged on the carrier plate (11), **characterized in that** the lifting scissor mechanism members (8) are of a continuously hollow design and are sealingly connected to one another, in order to actuate the gripping tool by means of a gaseous medium.

2. Handling device (1) according to Claim 1, **characterized in that** the gaseous medium is compressed air and a device (20) for generating compressed air is arranged on the drive vehicle.

3. Handling device (1) according to Claim 1, **characterized in that** the gaseous medium is a vacuum and a device (20) for generating a vacuum is arranged on the drive vehicle.

4. Handling device (1) according to Claim 3, **characterized in that** at least one vacuum-operable suction cup (19) is arranged on the carrier plate (11).

5. Handling device (1) according to one of the preceding claims, **characterized in that** at least one electric cable is laid in the interior in some of the lifting scissor mechanism members (8) of the lifting scissor mechanism (7).

6. Handling device (1) according to one of the preceding claims, **characterized in that** the connection of the lifting scissor mechanism member (8) by which the lifting scissor mechanism (7) is connected to the carrier plate (11) is designed as changeable fastening point (10).

## Revendications

1. Dispositif de manutention (1) comprenant un chariot d'entraînement (2) mobile relativement à un support (3), dans lequel un ciseau élévateur (7) à plusieurs segments (8) est relié au chariot d'entraînement (2) par sa première extrémité, dans lequel une plaque de support (11) déplaçable relativement au chariot d'entraînement (2) au moyen du ciseau élévateur (7) est disposée à la seconde extrémité du ciseau élévateur (7), dans lequel un outil de préhension est disposé sur la plaque de support (11), **caractérisé en ce que** les segments de ciseau élévateur (8) sont réalisés comme totalement creux et sont reliés l'un à l'autre de manière étanche, afin d'actionner l'outil de préhension au moyen d'un milieu gazeux.

2. Dispositif de manutention (1) selon la revendication 1, **caractérisé en ce que** le milieu gazeux est de l'air comprimé et un dispositif (20) permettant la production d'air comprimé est disposé sur le chariot d'entraînement.

3. Dispositif de manutention (1) selon la revendication 1, **caractérisé en ce que** le milieu gazeux est un vide et un dispositif (20) permettant la production d'un vide est disposé sur le chariot d'entraînement.

4. Dispositif de manutention (1) selon la revendication 3, **caractérisé en ce qu'**au moins une tulipe d'aspiration (19) pouvant fonctionner avec le vide est disposée sur la plaque de support (11).

5. Dispositif de manutention (1) selon l'une des revendications précédentes, **caractérisé en ce qu'**au moins un câble électrique est disposé à l'intérieur dans une partie des segments (8) du ciseau élévateur (7).

6. Dispositif de manutention (1) selon l'une des revendications précédentes, **caractérisé en ce que** la liaison du segment de ciseau élévateur (8) avec lequel le ciseau élévateur (7) est relié à la plaque de support (11) est réalisée comme point de fixation (10) amovible.
